# EUROPÄISCHE PATENTSCHRIFT

(11) **EP 2 213 500 B1**
(45) Veröffentlichungstag und Bekanntmachung des Hinweises auf die Patenterteilung: **11.05.2011**
(21) Anmeldenummer: 09016017.7
(22) Anmeldetag: 24.12.2009
(51) Int. Cl.: B60K 15/04

(54) **Kraftstoffleitung und Verfahren zum Herstellen einer Kraftstoffleitung**
Fuel line and method for producing same
Conduite de carburant et procédé de fabrication d'une conduite de carburant

(30) Priorität: 31.01.2009 DE 102009007019
(43) Veröffentlichungstag der Anmeldung: 04.08.2010
(73) Patentinhaber: NORMA Germany GmbH, 63477 Maintal (DE)
(72) Erfinder: Kertesz, Janos, 65843 Sulzbach (DE)
(74) Vertreter: Knoblauch, Andreas

(56) Entgegenhaltungen:
- DE-A1- 3 534 361
- DE-C1- 3 530 964
- GB-A- 291 187
- US-A- 4 822 054
- US-A- 4 924 923

## Beschreibung

Die Erfindung betrifft eine Kraftstoffleitung, insbesondere einen Einfüllstutzen für einen Kraftstofftank, mit einem Rohr und einer Anschlussgeometrie. Ferner betrifft die Erfindung ein Verfahren zum Herstellen einer derartigen Kraftstoffleitung.

Eine derartige Kraftstoffleitung wird z.B. zur Verbindung eines Kraftstofftanks, beispielsweise in einem Fahrzeug, mit einer Einfüllvorrichtung verwendet. Dabei wird in der Regel ein Teil der Kraftstoffleitung fest mit dem Kraftstofftank verbunden. Dieser Teil wird dann als Einfüllstutzen bezeichnet. Der Einfüllstutzen erstreckt sich teilweise in den Kraftstofftank hinein. Dabei setzt er sich aber auch außerhalb des Kraftstofftanks fort. In der Regel weist der Einfüllstutzen dabei außerhalb des Kraftstofftanks nur eine geringe Länge auf, die ausreichend ist, um eine Anschlussgeometrie aufzuweisen, an der eine weitere Kraftstoffleitung befestigt werden kann.

Das Rohr und die Anschlussgeometrie werden dabei üblicherweise einstückig hergestellt, um eine ausreichende Dichtigkeit zu gewährleisten. Die Herstellung erfolgt beispielsweise in einem Spritzgussverfahren. Dieses Verfahren erfordert relativ teure Gussformen, wobei es schwierig ist, Geometrieänderungen durchzuführen.

In der gatlingsgemäßen Druckschrift DE 35 30 964 C1 ist ein Verschluss für einen Benzineinfüllstutzen eines Kraftfahrzeuges beschrieben, wobei an einem Einfüllstutzen ein als Rohr ausgebildetes Abschlussteil befestigt ist. Das Rohr ist an seinem vom Einfüllstutzen abgewandten Ende mit einer Anschlussgeometrie versehen, wobei die Anschlussgeometrie möglicherweise an das Ende des Rohres angepresst ist.

DE 35 34 361 A1 betrifft einen Verschluss für einen Benzineinfüllstutzen eines Kraftfahrzeugs, wobei an einen Einfüllstutzen, der rohrförmig ausgebildet ist, eine Anschlussgeometrie fabrikatorisch aufgesetzt und befestigt ist. Möglicherweise ist diese Anschlussgeometrie dabei auf den rohrförmigen Anschlussstutzen angepresst.

GB 291 187 A betrifft Verbesserungen für Kraftstoff- und Öltanks für motorbetriebene Fahrzeuge, wobei eine Anschlussgeometrie d mit einer Art Bördelvorgang an einer Öffnung e eines Tanks a befestigt wird. Dabei wird ein vorstehender, die Öffnung e umgebender Kragen um einen Ringflansch der Anschlussgegeometrie umgebogen.

In US 4 924 923 A ist eine Kombination eines Dichtungs- und Überprüfungsventils beschrieben, dass in einer Kraftstoffleitung montiert werden kann. Dafür kann eine Anschlussgeometrie in die Kraftstoffleitung eingepresst werden.

In US 4 822 054 A ist eine Dichtung für eine Kraftstoffleitung gezeigt, wobei in ein glattwandiges Ende der Kraftstoffleitung eine Anschlussgeometrie eingepresst ist.

Der Erfindung liegt nun die Aufgabe zugrunde, den Herstellaufwand für eine diffusionsdichte Kraftstoffleitung zu verringern.

Diese Aufgabe wird mit einer Kraftstoffleitung der eingangs genannten Art dadurch gelöst, dass das Rohr zumindest an einem Ende glattwandig ist und die Anschlussgeometrie an das Ende angepresst ist, wobei das Rohr eine Barriereschicht aufweist.

Das Rohr selbst weist also eine handelsübliche Form auf und kann beispielsweise von einem vorgefertigten Rohrstück abgelängt werden, wobei die Länge ohne weiteres an die Einbaubedingungen angepasst werden kann. Durch das Anpressen der Anschlussgeometrie wird gleichzeitig eine sichere Verbindung zwischen dem Rohr und der Anschlussgeometrie sichergestellt. Zusätzliche Verbindungselemente sind nicht erforderlich. Der Herstellaufwand ist also sehr gering, so dass sich eine kostengünstige Fertigung erreichen lässt. Teuere Gussformen sind nicht erforderlich.

Das Rohr weist nun eine Barriereschicht auf. Kraftstoffe enthalten in der Regel Kohlenwasserstoffe, die durch viele Materialien hindurch diffundieren. Durch die Verwendung einer Barriereschicht wird dies nun verhindert. Als Barriereschicht kann beispielsweise Aluminium oder ein Kunststoffmaterial verwendet werden, das in das Rohr eingebettet wird.

Vorzugsweise deckt die Anschlussgeometrie eine Stirnseite des Rohres ab. Durch die Anschlussgeometrie wird verhindert, dass in die Stirnseite des Rohres Feuchtigkeit, insbesondere Kraftstoff, eindringt. Dies würde im schlimmsten Fall dazu führen, dass sich das Rohr zersetzt. Zumindest ist eine Leckage zu befürchten. Durch die Abdeckung der Stirnseite durch die Anschlussgeometrie wird also die Sicherheit der Verbindung erhöht.

Vorzugsweise ist die Anschlussgeometrie als doppelwandige Hülse mit einer Außenwand und einer Innenwand ausgebildet, wobei zwischen der Außenwand und der Innenwand ein Aufnahmeraum ausgebildet ist, in dem das Ende des Rohres aufgenommen ist. Das Rohr ist also auf einem Teil seiner axialen Länge innerhalb der Hülse aufgenommen. Dadurch ist eine relativ große Berührungsfläche zwischen der Hülse und dem Rohr ausgebildet. Dies führt zu einer guten Abdichtung. Gleichzeitig ist ein sicherer und zuverlässiger Sitz der Hülse auf dem Rohr gewährleistet. Die Hülse ist dabei derart mit dem Rohr verpresst, dass die Innenwand der Hülse radial von innen nach außen gegen das Rohr drückt. Genauso gut ist es möglich, die Hülse so mit dem Rohr zu verpressen, dass die Außenwand der Hülse radial von außen nach innen gegen das Rohr drückt. Dies vermindert die Gefahr, dass Kraftstoff an die Stirnseite des Rohres gelangt. Die Hülse kann dabei aus Stahl ausgebildet sein, was zu einer guten mechanischen Stabilität der Hülse führt. Dabei hat Stahl den Vorteil, dass er gut verarbeitbar und resistent gegen viele Flüssigkeiten ist.

Dabei ist besonders bevorzugt, dass die Außenwand und die Innenwand in einem vom Rohr abgewandten Endbereich aneinander anliegen. Dadurch wird die mechanische Stabilität der Hülse weiter erhöht. Auch der Endbereich, der axial außerhalb des Rohres angeordnet ist, ist somit ausreichend stabil. Dabei wird dadurch, dass die Außenwand und die Innenwand aneinander anliegen, nur wenig Bauraum benötigt. Die Strömungsverhältnisse werden daher nur geringfügig beeinflusst.

Bevorzugterweise ist zwischen der Anschlussgeometrie und der Stirnseite ein Dichtelement angeordnet. Das Dichtelement erhöht zum einen die Dichtigkeit zwischen der Anschlussgeometrie und dem Rohr. Dabei verhindert es aber auch beim Einpressen der Anschlussgeometrie, dass die Stirnseite des Rohres durch die Anschlussgeometrie beschädigt wird. Durch das Dichtelement werden axiale Kraftspitzen, die während des Einpressens eventuell auftreten können, gleichmäßig verteilt. Das Dichtelement ist dann mit einer Vorspannung zwischen der Anschlussgeometrie und der Stirnseite des Rohres angeordnet. Dadurch wird die Dichtigkeit nochmals erhöht.

Vorteilhafterweise ist das Dichtelement als Dichtring ausgebildet und zwischen Außenwand und/oder Innenwand der Anschlussgeometrie und dem Rohr angeordnet. Das Dichtelement ist dann keinen axialen Kräften ausgesetzt. Vielmehr ist es relativ geschützt angeordnet und kann daher aus einem relativ weichen Material hergestellt werden, so dass es eine gute Abdichtfunktion erbringen kann. Bei einer Anordnung des Dichtelements zwischen Außenwand und dem Rohr wird der Bereich, in dem Umwelteinflüsse von außen eindringen können, verringert. Bei einer Anordnung des Dichtelements zwischen Innenwand und dem Rohr wird entsprechend der Bereich verkleinert, in dem ein Fluid zwischen Anschlussgeometrie und Rohr vordringen kann.

Bevorzugterweise weist das Dichtelement einen L-förmigen Querschnitt auf und deckt die Stirnseite und einen Außenbereich des Rohres ab. Das Dichtelement ist also relativ großflächig ausgebildet und kann so für eine gute Abdichtung sorgen. Es ist dabei prinzipiell auch möglich, dass das Dichtelement die Stirnseite und einen Innenbereich des Rohres abdeckt.

Vorzugsweise weist das Dichtelement im Außenbereich eine Wulst auf, die sich radial nach außen erstreckt. Diese Wulst sorgt für eine Erhöhung der Klemmkraft zwischen Anschlussgeometrie und Rohr und damit für eine Erhöhung der Dichtigkeit.

In einer bevorzugten Ausführungsform weist das Dichtelement einen U-förmigen Querschnitt auf und deckt die Stirnseite, den Außenbereich und einen Innenbereich des Rohres ab. Das Ende des Rohres wird also durch das Dichtelement umhüllt. Damit wird zum einen eine sehr gute Abdichtung zwischen Anschlussgeometrie und Rohr erreicht und zum anderen das Ende des Rohres geschützt. Eindringen von Feuchtigkeit in die Stirnseite des Rohres ist dadurch nahezu ausgeschlossen. Bevorzugterweise weist die Anschlussgeometrie eine umlaufende Ringnut auf, in der ein Dichtring angeordnet ist. Dieser Dichtring sorgt für eine sichere Verbindung zwischen der Anschlussgeometrie und einer weiteren Kraftstoffleitung. Je nachdem, ob die Anschlussgeometrie als Einsteckteil oder als Aufnahmeelement ausgebildet ist, ist dabei die Ringnut radial außen oder radial innen angeordnet.

Vorteilhafterweise ist das Rohr mit einer Profilierung versehen. Die Profilierung ist dabei zu beiden Enden des Rohres beabstandet und dient als Oberflächenvergrößerung, um eine ausreichende Oberfläche für eine Schweißverbindung zwischen dem Rohr und einem Kraftstofftank zu erhalten. Die Profilierung ist beispielsweise durch mehrere Ringnuten gebildet, die in das glattwandige Rohr eingebracht worden sind. Diese Nuten dürfen dabei allerdings die Barriereschicht im Rohr nicht beschädigen, können also nur eine relativ geringe Tiefe aufweisen.

Bevorzugterweise ist die Profilierung als Flansch ausgebildet, der an das Rohr angespritzt ist. Ein Flansch kann in nahezu beliebiger Form hergestellt werden.

Durch das Anspritzen des Flansches an das Rohr wird dabei eine haltbare und sichere Verbindung gewährleistet, wobei es auch möglich ist, unterschiedliche Materialien für das Rohr und den Flansch zu verwenden. Dabei kann die Lage des Flansches einfach an die Länge des Rohres und damit an die Einbaubedingungen angepasst werden. Eine Anpassung der Spritzform ist dabei in der Regel nicht erforderlich. Mit geringem Aufwand lassen sich so verschiedene Längen der Kraftstoffleitung realisieren. Dabei ist besonders bevorzugt, dass der Flansch mehrere umlaufende Rillen aufweist. Die Oberfläche des Flansches wird also ebenfalls vergrößert, um eine sichere Schweißverbindung zu ermöglichen. Zusätzlich kann der Flansch eine radial umlaufende Schulter aufweisen, die zur sicheren Anlage am Kraftstofftank dient und die Verbindung so verbessert.

In einer weiteren bevorzugten Ausführungsform weist der Flansch eine Ringnut auf, wobei eine radial innere Seitenwand vom Rohr gebildet ist. Diese Ringnut ist in Axialrichtung geöffnet und dient beispielsweise zur Aufnahme eines Anschlusselements des Kraftstofftanks. Indem die radial innere Seitenwand der Nut durch das Rohr gebildet ist, ist gewährleistet, dass zwischen dem Kraftstofftank und dem Rohr eine große Kontaktfläche zur Verfügung steht. Das Anschlusselement des Kraftstofftanks kann dann sowohl mit dem Rohr als auch mit dem Flansch verschweißt werden. Dies führt zu einer sehr zuverlässigen Verbindung.

Die eingangs genannte Aufgabe wird durch ein Verfahren zum Herstellen einer Kraftstoffleitung gemäß Anspruch 1 bis 14 dadurch gelöst, dass das Rohr von einem glattwandigen, vorgefertigten Rohrstück abgelängt wird und die Anschlussgeometrie an ein Ende des Rohrs angepresst wird.

Durch das Ablängen des Rohres von einem vorgefertigten Rohrstück kann die Länge der Kraftstoffleitung mit sehr geringem Aufwand an die Einbaubedingungen angepasst werden. Glattwandige Rohre sind dabei sehr kostengünstig herzustellen und als Massenware verfügbar. Das Rohrstück und damit das Rohr kann bereits eine Barriereschicht aufweisen, um das Durchdiffundieren von Kohlenwasserstoffen zu verhindern. Das Anpressen der Anschlussgeometrie stellt dabei eine einfache und kostengünstige Verbindung dar, die gleichzeitig eine ausreichende Dichtigkeit gewährleistet. Dabei werden keine zusätzlichen Verbindungselemente benötigt, so dass die Kosten gering gehalten werden.

Dabei ist besonders bevorzugt, dass das Rohr mit einer Profilierung versehen wird. Die Profilierung wird also in das von einem glattwandigen, vorgefertigten Rohrstück abgelängte Rohr eingebracht. Die Lage der Profilierung, also die Abstände zu den jeweiligen Enden des Rohres, lässt sich dabei individuell festlegen. Die Anpassung an unterschiedliche Einbaubedingungen und Profilierungen ist daher problemlos möglich.

Dabei ist besonders bevorzugt, dass die Profilierung als Flansch ausgebildet wird, der an das Rohr angespritzt wird. Durch das Anspritzen ist die Ausbildung des Flansches in nahezu unbegrenzten Formen möglich. So ist es beispielsweise möglich, den Flansch mit umlaufenden Rillen und/oder mit einer radial umlaufenden Schulter zu versehen. Der Flansch kann auch mit einer Ringnut versehen werden. Aber auch andere Ausbildungen des Flansches sind denkbar.

Die Erfindung wird im Folgenden anhand bevorzugter Ausführungsbeispiele in Verbindung mit der Zeichnung beschrieben. Hierin zeigen in schematischer Ansicht:
- Fig. 1: eine Kraftstoffleitung einer ersten Ausfüh- rungsform,
- Fig. 2: eine Kraftstoffleitung einer zweiten Ausfüh- rungsform,
- Fig. 3: eine Kraftstoffleitung einer dritten Ausfüh- rungsform,
- Fig. 4: eine Kraftstoffleitung einer weiteren Aus- führungsform,
- Fig. 5: einen Ausschnitt der Ausführungsform nach Fig. 1 mit einer bevorzugten Ausbildung des Dichtelements,
- Fig. 6: eine schematische Darstellung des Rohres mit einem L-förmigen Dichtelement und
- Fig. 7: eine schematische Darstellung des Rohres mit einem U-förmigen Dichtelement.

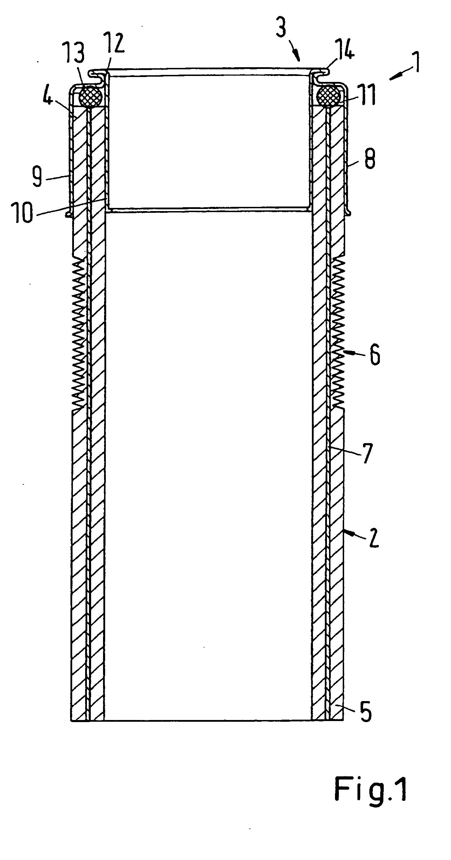

In Fig. 1 ist eine Kraftstoffleitung 1 dargestellt, die als Einfüllstutzen für einen Kraftstofftank ausgebildet ist. Der Kraftstofftank ist nicht dargestellt. Die Kraftstoffleitung 1 weist ein Rohr 2 und eine Anschlussgeometrie 3 auf. Die Anschlussgeometrie 3 ist an einem Ende 4 des Rohres 2 angeordnet und über eine Pressverbindung mit dem Rohr 2 verbunden. Ein weiteres Ende 5 des Rohres 2 soll sich in den Kraftstofftank erstrecken.

Das Rohr 2 ist aus einem glattwandigen, vorgefertigten Rohrstück hergestellt. Im Bereich seiner Enden 4, 5 ist das Rohr 2 weiterhin glattwandig. Mit Abstand zu den Enden 4, 5 ist das Rohr 2 mit einer Profilierung 6 versehen worden. Bei diesem Ausführungsbeispiel ist die Profilierung 6 als umlaufende Rillen ausgebildet. Diese können beispielsweise in das Rohr 2 eingepresst oder durch spanende Verarbeitung eingebracht worden sein.

Das Rohr 2 weist ferner eine Barriereschicht 7 auf, die als Barriere gegen Kohlenwasserstoffe dient und beispielsweise Aluminium oder einen entsprechenden Kunststoff aufweist. Das Rohr 2 kann ebenfalls aus Kunststoff hergestellt sein.

Die Anschlussgeometrie 3 ist als doppelwandige Hülse 8 mit einer Außenwand 9 und einer Innenwand 10 ausgebildet. Die Hülse 8 ist beispielsweise aus Stahl hergestellt. Zwischen Außenwand 9 und Innenwand 10 befindet sich ein Aufnahmeraum 11, in dem das Ende 4 des Rohrs 2 aufgenommen ist. Dabei ist ein äußerer Durchmesser der Innenwand 10 etwas größer als ein Innendurchmesser des Rohres 2, so dass die Hülse kraftschlüssig im Rohr 2 eingepresst ist. Die Innenwand 10 drückt dabei radial nach außen gegen das Rohr 2. Zwischen der Innenwand 10 und dem Rohr 2 erfolgt also eine sehr dichte Verbindung.

Eine Stirnseite 12 des Rohres 2 am Ende 4 wird dabei durch die Anschlussgeometrie 3 abgedeckt. Zusätzlich ist zwischen Anschlussgeometrie 3 und der Stirnseite 12 ein Dichtelement 13 angeordnet, das als Dichtring ausgebildet ist. Das Eindringen von Feuchtigkeit in die Stirnseite 12 wird dadurch zuverlässig verhindert. Zusätzlich wird die Dichtigkeit zwischen Anschlussgeometrie 3 und Rohr 2 erhöht.

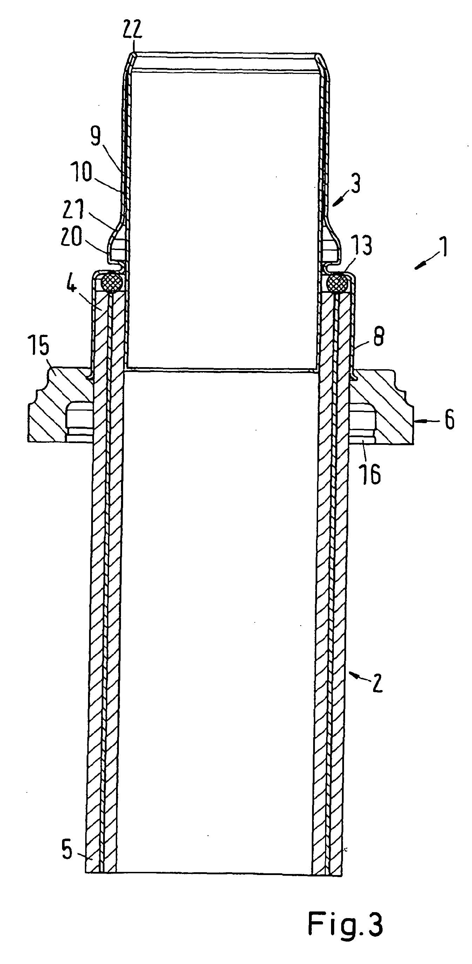

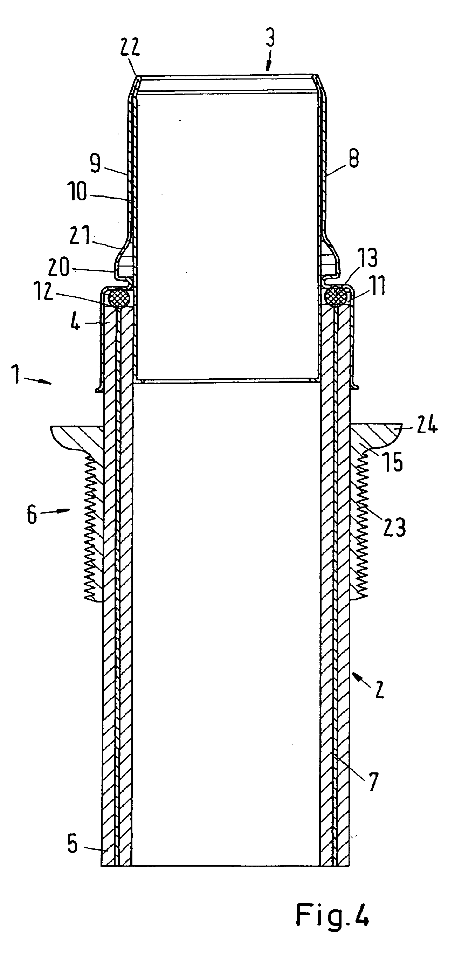

Bei diesem Ausführungsbeispiel ist die Anschlussgeometrie 3 bzw. die Hülse 8 als Aufnahmeelement ausgebildet, wobei ein entsprechend ausgebildetes Einsteckelement, wie es beispielsweise in den Fig. 3 und 4 dargestellt ist, in das Aufnahmeelement eingeführt werden kann. Die Anschlussgeometrie 3 weist dabei einen umlaufenden Kragen 14 auf, der zur Aufnahme eines nicht dargestellten Rastringes dient. Ein Rastring sorgt dafür, dass sich Aufnahmeelement und Einsteckelement nicht mehr ohne weiteres voneinander lösen.

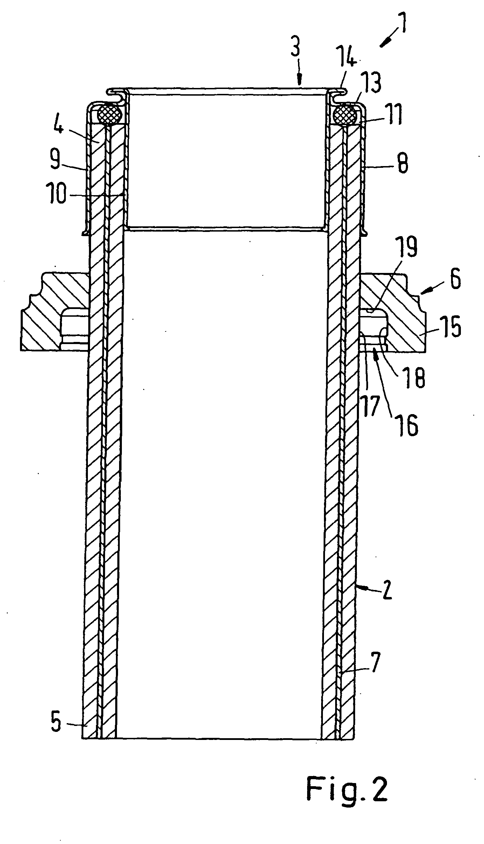

In Fig. 2 ist eine weitere Ausführungsform der Kraftstoffleitung 1 dargestellt, die sich von der Ausführungsform in Fig. 1 dadurch unterscheidet, dass die Profilierung 6 als Flansch 15 ausgebildet ist, der an das Rohr 2 angespritzt wurde. Die axiale Lage des Flansches, also sein Abstand zu den Enden 4, 5, kann dabei nahezu beliebig eingestellt werden. Die Anpassung der Kraftstoffleitung 1 an die Einbaubedingungen ist daher ohne weiteres möglich.

Der Flansch 15 weist eine Ringnut 16 auf, die eine innere Seitenwand 17, eine äußere Seitenwand 18 und einen Boden 19 aufweist. Die innere Seitenwand 17 wird dabei durch das Rohr 2 gebildet. Die Ringnut 16 dient zur Aufnahme eines Anschlusselements eines Kraftstofftanks, wobei ein Verschweißen des Anschlusselements sowohl mit dem Rohr 2 als auch mit dem Flansch 15 möglich ist.

In Fig. 3 ist eine Kraftstoffleitung 1 dargestellt, wobei die Anschlussgeometrie 3 nicht als Aufnahmeelement, wie in den Fig. 1 und 2, sondern als Einsteckelement ausgebildet ist. Bei dieser Ausbildung ist es besonders vorteilhaft, dass die Außenwand 9 und die Innenwand 10 in einem Endbereich, der vom Rohr 2 abgewandt ist, aneinander anliegen. Die Anschlussgeometrie 3 weist ferner einen Kragen 20 und eine Anlaufschräge 21 auf, wobei die Anlaufschräge 21 das Verrasten mit einem Rastring erleichtern soll, der mit dem Kragen 20 verrastet. An einer vom Rohr 2 abgewandten Stirnseite 22 verjüngt sich die Anschlussgeometrie 3 etwas. Dies erleichtert das Einführen in ein Aufnahmeelement. Gleichzeitig ergibt sich eine leichte Erhöhung der Steifigkeit.

Bei diesem Ausführungsbeispiel ist der Flansch 15 dabei nicht nur um das Rohr 2 gespritzt, sondern auch um einen kleinen Bereich der Anschlussgeometrie 3. Der Flansch 15 sichert also die Anschlussgeometrie 3 zusätzlich am Rohr 2. Zusätzlich wird die Dichtigkeit der Verbindung zwischen Anschlussgeometrie 3 und Rohr 2 weiter erhöht.

In Fig. 4 ist eine Kraftstoffleitung 1 dargestellt, die im Wesentlichen der Ausführungsform gemäß Fig. 3 entspricht. Die Profilierung 6 ist wieder als Flansch 15 ausgebildet. Der Flansch 15 weist dabei mehrere umlaufende Rillen 23 auf, die zu einer Oberflächenvergrößerung des Flansches 15 führen. Dadurch kann die Sicherheit einer Schweißverbindung zwischen dem Flansch 15 und einem Kraftstofftank erhöht werden. Der Flansch 15 weist ferner eine radial umlaufende Schulter 24 auf, die bei der Montage der Kraftstoffleitung 1 in einem Kraftstofftank zur Anlage mit einem Anschlusselement des Kraftstofftanks kommen kann. Dadurch wird die axiale Lage der Kraftstoffleitung 1 gegenüber dem Kraftstofftank festgelegt. Gleichzeitig wird die Sicherheit der Verbindung zwischen Kraftstoffleitung 1 und Kraftstofftank erhöht.

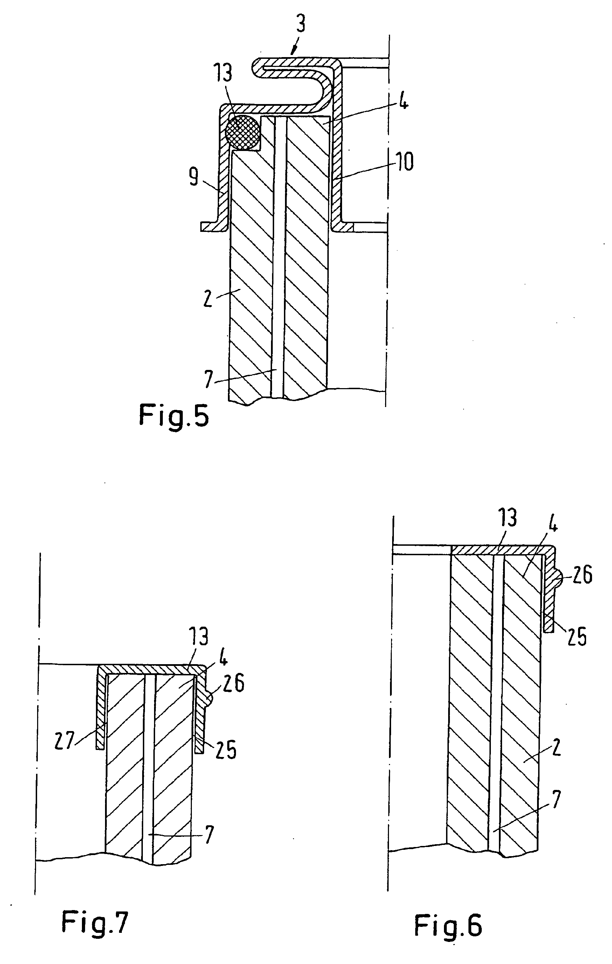

In Fig. 5 ist ein Ausschnitt aus der Kraftstoffleitung gemäß Fig. 1 gezeigt, wobei das Dichtelement 13 als Dichtring ausgebildet ist und zwischen der Außenwand 9 der Anschlussgeometrie 3 und dem Rohr 2 angeordnet ist. Weitere Ausformungen des Dichtelements 13 sind in den Fig. 6 und 7 dargestellt, wobei der Einfachheit halber die Außengeometrie 3 weggelassen wurde.

In Fig. 6 weist das Dichtelement 13 einen L-förmigen Querschnitt auf, wobei das Dichtelement 13 die Stirnseite 12 und einen Außenbereich 25 des Rohres 2 abdeckt. Der Außenbereich 25 ist dabei am axialen Ende 4 des Rohres 2 angeordnet. Das Dichtelement 13 weist dort, wo es den Außenbereich 25 abdeckt, eine Wulst 26 auf, die sich radial nach außen erstreckt. Die Wulst 26 dient zur Erhöhung der Dichtigkeit.

Gemäß Fig. 7 ist das Dichtelement 13 mit einem U-förmigen Querschnitt ausgebildet, wobei das Dichtelement 13 den Außenbereich 25, die Stirnseite 12 und einen Innenbereich 27 des Rohres 2 abdeckt. Das Rohr 2 ist also an seinem axialen Ende 4 vom Dichtelement 13 umgeben und so gut gegen äußere Einflüsse geschützt. Gleichzeitig sorgt das Dichtelement 13 für eine gute Abdichtung zwischen Rohr 2 und der in Fig. 7 nicht dargestellten Anschlussgeometrie 3. Das Dichtelement 13 ist auch bei dieser Ausbildung, mit einer Wulst 26 versehen, die sich radial nach außen erstreckt. Die Wulst 26 ist allerdings nicht in jedem Fall erforderlich.

Andere Ausbildungen des Flansches 15 sind denkbar. Wichtig ist dabei nur, dass dieser an das Rohr, das von einem vorgefertigten Rohrstück abgelängt wird, angespritzt wird. Eine zuverlässige und dichte Verbindung zwischen Flansch und Rohr ist dadurch gewährleistet. Dabei ist es möglich, ein handelsübliches Rohr zu verwenden. Eine Anfertigung der gesamten Kraftstoffleitung als Spritzgussteil, wie bisher üblich, kann vermieden werden. Die Herstellkosten werden so verringert. Gleichzeitig wird durch die verwendeten Verbindungstechniken, zum einen der Presssitz zwischen Anschlussgeometrie und Rohr und zum anderen das Anspritzen des Flansches, eine zuverlässige und dichte Verbindung gewährleistet. Die erfindungsgemäße Kraftstoffleitung ermöglicht also eine kostengünstige Herstellung mit geringem Aufwand, wobei gleichzeitig eine einfache Anpassung an unterschiedliche Einbaubedingungen möglich ist.

## Patentansprüche

1. Kraftstoffleitung, insbesondere Einfüllstutzen für einen Kraftstofftank, mit einem Rohr und einer Anschlussgeometrie, wobei das Rohr (2) zumindest an einem Ende (4) glattwandig ist und die Anschlussgeometrie (3) an das Ende (4) angepresst ist, **dadurch gekennzeichnet daß** das Rohr (2) eine Barriereschicht (7) aufweist.

2. Kraftstoffleitung nach Anspruch 1, **dadurch gekennzeichnet, dass** die Anschlussgeometrie (3) eine Stirnseite (12) des Rohres (2) abdeckt.

3. Kraftstoffleitung nach Anspruch 1 oder 2, **dadurch gekennzeichnet, dass** die Anschlussgeometrie (3) als doppelwandige Hülse (8) mit einer Außenwand (9) und einer Innenwand (10) ausgebildet ist, wobei zwischen der Außenwand (9) und der Innenwand (10) ein Aufnahmeraum (11) ausgebildet ist, in dem das Ende (4) des Rohres (2) aufgenommen ist.

4. Kraftstoffleitung nach Anspruch 3, **dadurch gekennzeichnet, dass** die Außenwand (9) und die Innenwand (10) in einem vom Rohr (2) abgewandten Endbereich aneinander anliegen.

5. Kraftstoffleitung nach einem der Ansprüche 1 bis 4, **dadurch gekennzeichnet, dass** zwischen der Anschlussgeometrie (3) und der Stirnseite (12) ein Dichtelement (13) angeordnet ist.

6. Kraftstoffleitung nach einem der Ansprüche 1 bis 5, **dadurch gekennzeichnet, dass** das Dichtelement (13) als Dichtring ausgebildet ist und zwischen Außenwand (9) und/oder Innenwand (10) der Anschlussgeometrie (3) und dem Rohr (2) angeordnet ist.

7. Kraftstoffleitung nach einem der Ansprüche 1 bis 6, **dadurch gekennzeichnet, dass** das Dichtelement (13) einen L-förmigen Querschnitt aufweist und die Stirnseite (12) und einen Außenbereich des Rohres (2) abdeckt.

8. Kraftstoffleitung nach Anspruch 7, **dadurch gekennzeichnet, dass** das Dichtelement (13) im Außenbereich (25) eine Wulst (26) aufweist, die sich radial nach außen erstreckt.

9. Kraftstoffleitung nach einem der Ansprüche 1 bis 8, **dadurch gekennzeichnet, dass** das Dichtelement (13) einen U-förmigen Querschnitt aufweist und die Stirnseite (12), den Außenbereich (25) und einen Innenbereich (27) des Rohres (2) abdeckt.

10. Kraftstoffleitung nach einem der Ansprüche 1 bis 9, **dadurch gekennzeichnet, dass** die Anschlussgeometrie (3) eine umlaufende Ringnut aufweist, in der ein Dichtring angeordnet ist.

11. Kraftstoffleitung nach einem der Ansprüche 1 bis 10, **dadurch gekennzeichnet, dass** das Rohr (2) mit einer Profilierung (6) versehen ist.

12. Kraftstoffleitung nach Anspruch 11, **dadurch gekennzeichnet, dass** die Profilierung (6) als Flansch (15) ausgebildet ist, der an das Rohr (2) angespritzt ist.

13. Kraftstoffleitung nach Anspruch 12, **dadurch gekennzeichnet, dass** der Flansch (15) mehrere umlaufende Rillen (23) aufweist.

14. Kraftstoffleitung nach Anspruch 12, **dadurch gekennzeichnet, dass** der Flansch (15) eine Ringnut (16) aufweist, wobei eine radial innere Seitenwand (17) vom Rohr (2) gebildet ist.

15. Verfahren zum Herstellen einer Kraftstoffleitung nach einem der Ansprüche 1 bis 14, **dadurch gekennzeichnet, dass** das Rohr von einem glattwandigen, vorgefertigten Rohrstück abgelängt wird und die Anschlussgeometrie an ein Ende des Rohrs angepresst wird.

16. Verfahren nach Anspruch 15, **dadurch gekennzeichnet, dass** das Rohr mit einer Profilierung versehen wird.

17. Verfahren nach Anspruch 16, **dadurch gekennzeichnet, dass** die Profilierung als Flansch ausgebildet wird, der an das Rohr angespritzt wird.

## Claims

1. A fuel line (1), in particular a filler neck for a fuel tank, comprising a pipe (2) having smooth walls at least at one end (4), and
a connection geometry (3),
wherein the connection geometry (3) is pressed onto the at least one end (4), **characterized in that** the pipe (2) comprises a barrier layer (7).

2. The fuel line (1) in accordance with claim 1, **characterized in that** the connection geometry (3) covers a front face (12) of the pipe (2).

3. The fuel line (1) in accordance with claim 1 or claim 2, **characterized in that** the connection geometry (3) is formed as a double-walled sleeve (8) having an outer wall (9), an inner wall (10), and a receptacle region (11) formed between the outer wall (9) and the inner wall (10), in which the at least one end (4, 5) of the pipe is received.

4. The fuel line (1) in accordance with claim 3, **characterized in that** the outer wall (9) and the inner wall (10) are arranged to bear against one another in an end region facing away from the pipe (2).

5. The fuel line (1) in accordance with at least one of the claims 1 to 4, **characterized in that** a sealing ring (13) is arranged between the connection geometry (3) and the front face (12).

6. The fuel line (1) in accordance with at least one of the claims 1 to 5, **characterized in that** a sealing element (13) is formed as a sealing ring and is arranged between the outer wall (9) and/or inner wall (10) of the connection geometry (3) and the pipe (2).

7. The fuel line (1) in accordance with at least one of the claims 1 to 6, **characterized in that** the sealing element (13) comprises an L-shaped cross section and covers the front face (12) and an outer region (25) of the pipe (2).

8. The fuel line (1) in accordance with claim 7, **characterized in that** in the outer region (25) the sealing element (13) comprises a boss (26) extending radially outwards.

9. The fuel line (1) in accordance with at least one of the claims 1 to 8, **characterized in that** the sealing element (13) comprises a U-shaped cross section and covers the front face (12), an outer region (25) and an inner region (27) of the pipe (2).

10. The fuel line (1) in accordance with at least one of the claims 1 to 9, **characterized in that** the connection geometry (3) has a peripheral annular groove in which a sealing ring is arranged.

11. The fuel line (1) in accordance with at least one of the claims 1 to 10, **characterized in that** a profiling (6) is provided on the pipe (2).

12. The fuel line (1) in accordance with claim 11, **characterized in that** the profiling (6) is formed as a flange (15) which is molded onto the pipe (2).

13. The fuel line (1) in accordance with claim 12, **characterized in that** the flange (15) includes several peripheral grooves (23).

14. The fuel line (1) in accordance with claim 12, **characterized in that** the flange (15) comprises an annular groove (16) with a radially inner side wall (17) formed by the pipe (2).

15. A method for producing the fuel line (1) in accordance with at least one of the claims 1 to 14, **characterized in that**
the pipe (2) is cutted to lengh from a smooth-walled, prefabricated pipe piece and
a connection geometry (3) is pressed onto an end of the pipe (2).

16. The method in accordance with claim 15, **characterized in that** a profiling (6) is provided on the pipe (2).

17. The method in accordance with claim 16, **characterized in that** the profiling (6) is formed as a flange (15) which is molded onto the pipe (2).

## Revendications

1. Conduite de carburant, en particulier pipe de remplissage pour un réservoir à carburant, comprenant un tube et une forme de raccordement, telle que le tube (2) comporte des parois lisses à au moins une extrémité (4) et la forme de raccordement (3) est assemblée par pressage à l'extrémité (4),
**caractérisée en ce que** le tube (2) comporte une couche de barrière (7).

2. Conduite de carburant selon la revendication 1, **caractérisée en ce que** la forme de raccordement (3) couvre une face frontale (12) du tube (2).

3. Conduite de carburant selon la revendication 1 ou 2, **caractérisée en ce que** la forme de raccordement (3) est réalisée sous forme de douille à double paroi (8) avec une paroi extérieure (9) et une paroi intérieure (10), avec une chambre de réception (11), réalisée entre la paroi extérieure (9) et la paroi intérieure (10), dans laquelle est reçue l'extrémité (4) du tube (2).

4. Conduite de carburant selon la revendication 3, **caractérisée en** en ce que la paroi extérieure (9) et la paroi intérieure (10) sont en contact l'une avec l'autre dans une zone terminale retournée du tube (2).

5. Conduite de carburant selon l'une des revendications 1 à 4, **caractérisée en ce qu'**un élément d'étanchéité (13) est agencé entre la forme de raccordement (3) et la face frontale (12).

6. Conduite de carburant selon l'une des revendications 1 à 5, **caractérisée en ce que** l'élément d'étanchéité (13) est réalisé sous forme de bague d'étanchéité et est agencé entre la paroi extérieure (9) et/ou la paroi intérieure (10) de la forme de raccordement (3) et le tube (2).

7. Conduite de carburant selon l'une des revendications 1 à 6, **caractérisée en ce que** l'élément d'étanchéité (13) présente une section transversale en forme de L, et couvre la face frontale (12) et une zone extérieure du tube (2).

8. Conduite de carburant selon la revendication 7, **caractérisée en ce que** l'élément d'étanchéité (13) comporte dans la zone extérieure (25) un bourrelet (26) qui s'étend radialement vers l'extérieur.

9. Conduite de carburant selon l'une des revendications 1 à 8, **caractérisée en ce que** l'élément d'étanchéité (13) présente une section transversale en forme de U et couvre la face frontale (12), la zone extérieure (25) et une zone intérieure (27) du tube (2).

10. Conduite de carburant selon l'une des revendications 1 à 9, **caractérisée en ce que** la forme de raccordement (3) comporte une gorge annulaire périphérique dans laquelle est agencée une bague d'étanchéité.

11. Conduite de carburant selon l'une des revendications 1 à 10, **caractérisée en ce que** le tube (2) est pourvu d'un profilage (6).

12. Conduite de carburant selon la revendication 11, **caractérisée en ce que** le profilage (6) est réalisé sous forme de bride (15) qui est formé par surmoulage sur le tube (2).

13. Conduite de carburant selon la revendication 12, **caractérisée en ce que** la bride (15) comporte plusieurs rainures périphériques (23).

14. Conduite de carburant selon la revendication 12, **caractérisée en ce que** la bride (15) comporte une gorge annulaire (16), et une paroi latérale intérieure radiale (17) est formée par le tube (2).

15. Procédé pour réaliser une conduite de carburant selon l'une des revendications 1 à 14, **caractérisé en ce que** le tube est coupé à longueur depuis un morceau de tube préfabriqué à paroi lisse, et la forme de raccordement est assemblée par pressage à une extrémité du tube.

16. Procédé selon la revendication 15, **caractérisé en ce que** le tube est pourvu d'un profilage.

17. Procédé selon la revendication 16, **caractérisé en ce que** le profilage est réalisé sous forme de bride qui est formé sur le tube par surmoulage.
